Europäisches Patentamt

European Patent Office

Office européen des brevets

(11) Publication number: **0 232 128**
A2

# EUROPEAN PATENT APPLICATION

(21) Application number: **87300772.8**

(22) Date of filing: **29.01.87**

(51) Int. Cl.⁴: **D 21 F 1/66**
**D 21 D 5/04**

(30) Priority: **31.01.86 GB 8602365**

(43) Date of publication of application:
**12.08.87 Bulletin 87/33**

(84) Designated Contracting States: **DE FR GB SE**

(71) Applicant: **ALBANY INTERNATIONAL CORP.**
**1 Sage Road**
**Menands New York 12204 (US)**

(72) Inventor: **Hudon, James Denis**
**Byeways 10 Ledborough Lane**
**Beaconsfield Buckinghamshire, HP9 2PZ (GB)**

(74) Representative: **Hill, Cecilia Ann et al**
**Abel & Imray Northumberland House 303-306 High Holborn**
**London, WC1V 7LH (GB)**

(54) **Filtering devices.**

(57) A filtering device suitable for use in, for example, the papermaking industry has a generally-horizontal circular screen (7) onto which the liquid to be filtered flows from a tank (I) around the periphery of the screen. Solids filtered out of the liquid remain on the screen and are moved by a shower (I8) to an outlet (6) at the centre of the screen. The shower (I8) comprises several horizontal spray bars which extend radially across the screen and rotate about an axis at the centre of the screen. Each bar has a set of nozzles (I9), the locations of which are staggered with respect to the nozzle locations on the other bars. This ensures that the impact areas of one set of nozzles (I9) on the screen (7) do not follow the same paths over the screen as the preceding set of nozzles so that a more even coverage of the screen by the shower (I8) is achieved.

FIG.I.

EP 0 232 128 A2

## Description

<u>Filtering Devices</u>     <u>Case A</u>

The present invention relates to filtering devices for removing solid particles from liquids.

The invention relates in particular to filtering devices of the type in which the liquid to be filtered is fed onto a screen and in which solids filtered out by the screen are moved to an outlet by a shower directed at the screen. The shower also functions to clean the screen. Filtering devices of this type are employed in, for example, the papermaking industry for treating waste water, particularly with a view to recirculating the water and enabling the consumption of fresh water to be reduced.

Generally, the shower comprises a plurality of spray nozzles directed at the screen to urge the solids towards a discharge outlet for collection, the removal of solids being assisted by relative movement between the nozzles and the screen. In one known type of filtering device, the generally-horizontal screen is circular and the spray nozzles are arranged on at least one spray bar which extends radially outwards from a support at the centre of the screen, the support being rotated to move the spray bar over the entire surface of the screen. Liquid to be filtered flows under gravity onto the screen from a tank around the periphery of the screen, and the spray nozzles are arranged to direct the solids to a discharge outlet at the centre of the screen. The spray nozzles can be located either above or below the generally-horizontal screen.

Filtering devices of this known type offer the advantages of being comparatively inexpensive to manufacture and to operate and of being both reliable and generally efficient. It has been found, however, that solids deposited on the screen are not always completely removed by the shower, particularly when the pressure of the shower liquid is low. As a result, there is a tendency for solids to build up on the screen and this reduces the efficiency of the filtering action. It is an object of the present invention to enable this problem to be overcome.

The present invention provides a filtering device comprising a filter screen arranged to receive a liquid to be filtered and a plurality of nozzles positioned to direct a cleaning liquid at the screen and movable relative to the screen in succession to remove solids deposited on the screen from the liquid being filtered, the nozzles being so arranged that successive nozzle impact areas do not follow the same path(s) over the screen.

The "impact area" of a nozzle on the screen means the area of intersection of the screen and the jet or spray of cleaning liquid from that nozzle.

The present invention further provides a filtering device comprising a circular filter screen arranged to receive a liquid to be filtered and having an outlet for solids deposited on the screen from the liquid, and a plurality of nozzles rotatable in succession, relative to the screen, about an axis at the centre of the screen. the nozzles being positioned to direct a cleaning liquid at the screen to direct solids deposited thereon to the outlet and being so arranged that successive nozzle impact areas on the screen are displaced radially relative to the screen.

The device may include a plurality of support members each of which carries a plurality of nozzles and which are rotatable one after another about the said axis at the centre of the screen. The nozzles may then be so arranged on the support members that the impact areas of nozzles on one support member are displaced relative to the impact areas of nozzles on another support member. In an embodiment of the invention, the nozzles on the said one support member are located at one set of distances from the said axis and the nozzles on the other support member are located at a different set of distances.

The present invention also provides a method of filtering a liquid, comprising the steps of supplying the liquid to a filter screen; directing at least one jet of cleaning liquid at the screen and effecting relative movement between the jet(s) and the screen to cause the passage over the screen of a succession of jet impact areas and thereby to move solids deposited on the screen from the liquid being filtered, in which successive impact areas do not follow the same path over the screen.

By way of example, a filtering device constructed in accordance with the present invention will be described with reference to the accompanying drawings in which:

Fig. I is a diagrammatic illustration of the device in operation, partly broken away;

Fig. 2 is a plan view of the device;

Fig. 3 is a section on the line III-III of Fig. 2;

Fig. 4 shows part of a shower bar of the device;

Fig. 5 is a diagrammatic plan view of the shower of the devic.

Fig. 6 <u>a</u>, <u>b</u> and <u>c</u> illustrate details of the shower of Fig. 5;

Fig. 7 shows the central part of the shower, and

Figs. 8 and 9 show alternative forms of shower.

The filtering device comprises a cylindrical tank I which is open at the top and, at the bottom of one side, has a horizontal inlet pipe 2 through which liquid to be filtered is supplied to the tank. The tank stands on legs 3. Within the tank I, a second cylindrical container is defined by a wall 4 the top of which lies below the top of the tank. Within the area of this second container, the floor 5 of the tank is dish-shaped and has a vertical outlet pipe 6 at its centre. The outlet pipe 6 extends into the tank as shown and terminates at a screen 7 which extends across the inner container 4 at a distance below the top thereof. The screen 7 has an opening 8 at its centre, in alignment with the outlet pipe 6. A second outlet opening 9 is formed in the floor 5 of the tank, to one side of the outlet pipe 6, and leads to a second outlet pipe I0. A smaller third opening II in the floor of the tank, adjacent the outer wall, leads to a

drain pipe 12 which is normally closed by a valve 13.

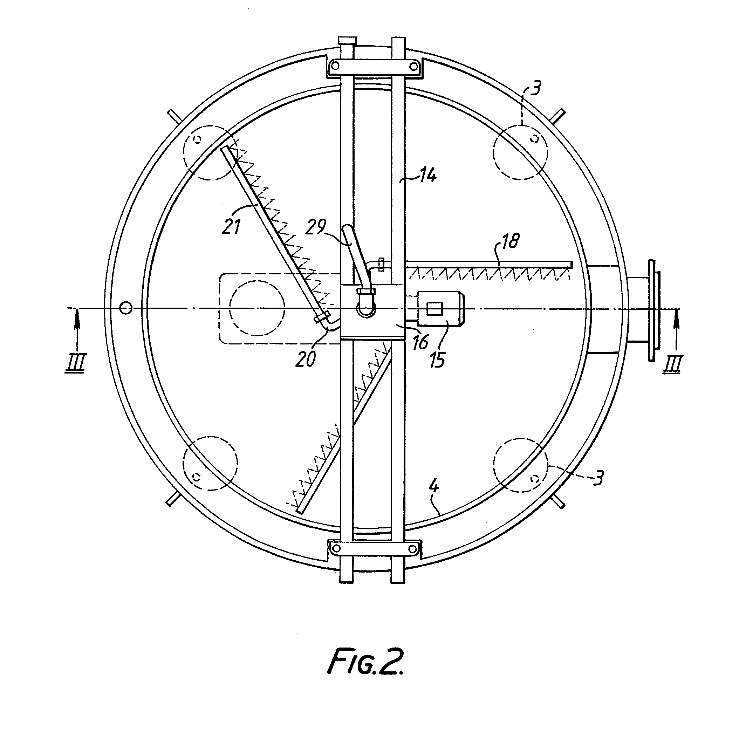

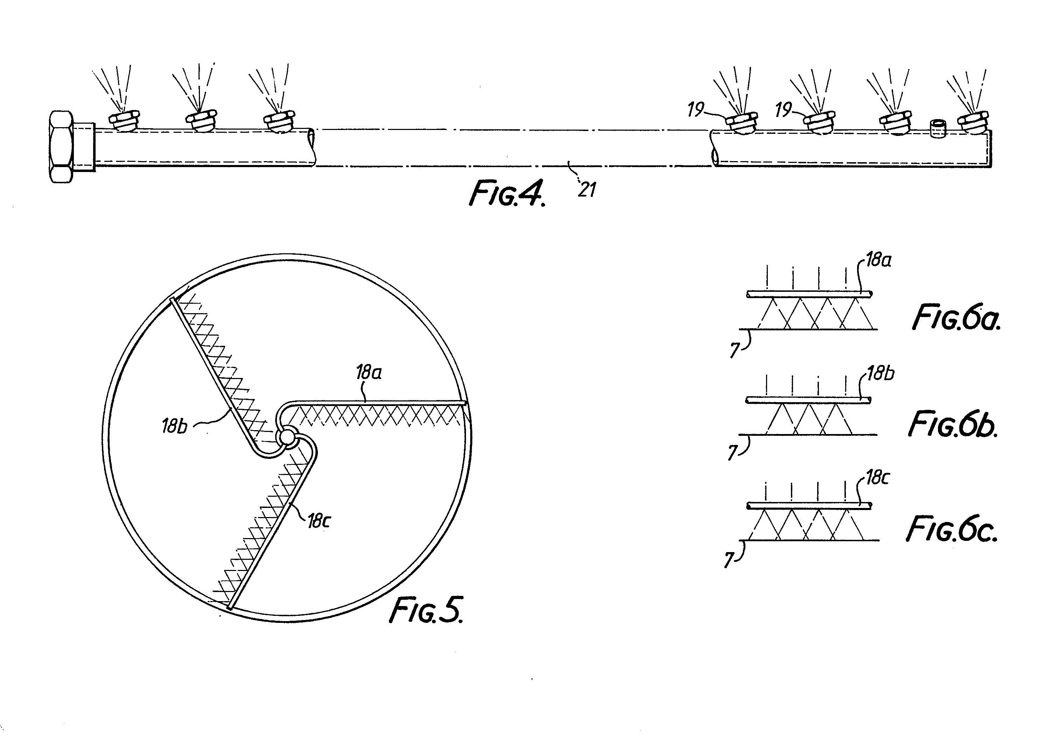

A support beam 14 extends diametrically across the top of the tank 1 and carries a motor 15 connected through gear box 16 to rotate a downwardly-extending shaft 17 (the rotation being normally clockwise as viewed in Fig. 2). The shaft 17 is located on the vertical axis of the tank and terminates just above the screen 7. On this lower end of the shaft 17 are mounted three horizontal spray bars 18 each of which extends from the shaft in a generally radial direction. Each bar 18 has a series of nozzles 19 (Fig. 4) and is supplied with water via the shaft 17 from a conduit 29.

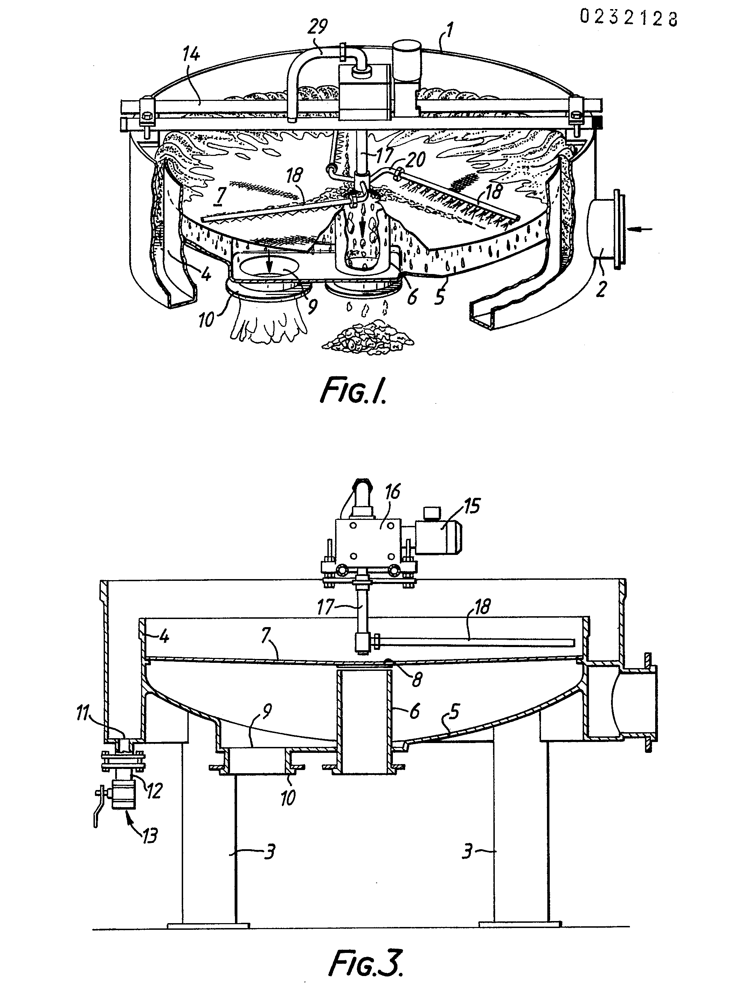

Each bar 18 has an angled portion 20 at its inner end, which is joined to the shaft 17, and a much longer straight portion 21 on which the nozzles are located. Fig. 4 shows one of the straight portions 21 and it can be seen that the nozzles 19 are iclined to the axis of the bar 18, the inclination being such that (as indicated in Figs. 1 and 2) the spray of water from the nozzles is directed both forwards in the direction of movement of the bar and inwards towards the centre of the screen 7.

In operation, the liquid to be filtered is fed to the tank 1 through the inlet pipe 2 and fills the annular space between the tank wall and the inner container 4, whereupon it flows over the wall of the inner container and on to the screen 7. At the same time, the shaft 17 is rotated and water is supplied to the spray bars 18. The liquid being filtered, together with any very fine particles, passes through the screen and collects in the dish-shaped floor 5 of the tank from where it runs out through the outlet pipe 10. Solids remain on the screen 7 and are directed, by the spray of water from the rotating bars 18, towards the centre of the screen where they pass through the centre opening 8 and into the outlet pipe 6 for collection and subsequent disposal.

Each of the nozzles 19 has a respective impact area on the screen 7 but is not necessarily equally effective over the whole of that area. To ensure that there is no build-up of solids on any part of the screen, the spray nozzles 19 on each of the bars 18 are so arranged that the impact areas of those nozzles do not follow exactly the same circular paths as the impact areas of the nozzles of the preceding bar. Rather, the circular paths are staggered, this being achieved, as illustrated in Figs. 5 and 6, by displacing the nozzles on one bar 18b inwards or outwards slightly relative to those of the preceding bar 18a while those on the third bar 18c are likewise displaced inwards or outwards slightly relative to those on the preceding bar 18b. In this way, successive impact areas are displaced in a direction perpendicular to their direction of movement and a more even coverage of the screen 7 can be achieved, even if the sprays from adjacent nozzles on the same spray bar 18 do not overlap (as a result, for example, of a fall in the water supply pressure).

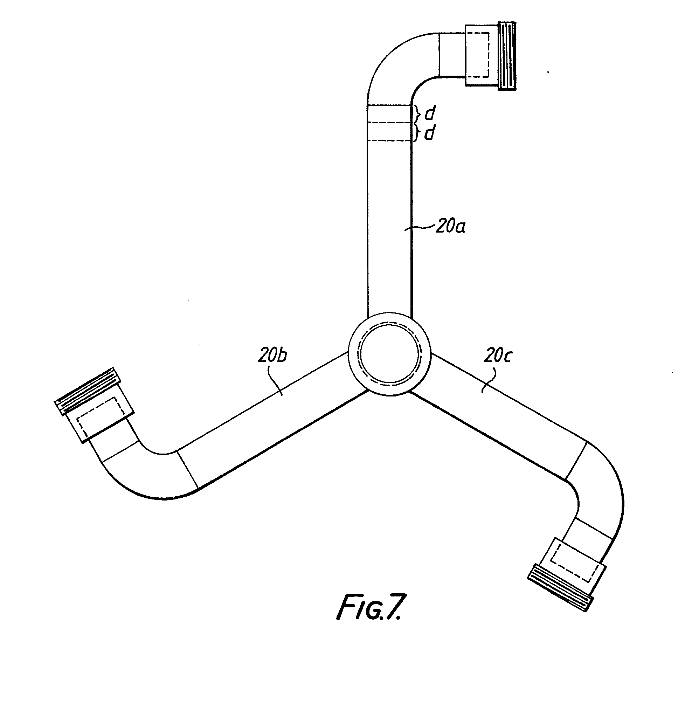

The staggering of the nozzles 19 on the three spray bars 18 can be achieved most simply by making the radially-extending arms of the angled portions 20 of different lengths thereby altering the distances of the innermost nozzles from the centre of the screen 7. This is illustrated by Fig. 7 which shows the angled portions 20 a, b and c of the spray bars 18 a, b and c.

The radially-extending arm of of portion 20b is shorter by a small length than $d$ than that of the portion 20a while that of the portion 20c is shorter by a length $2d$, the distance $d$ being less than the spacing of the nozzles on the bars: typically, if the length of the radially-extending arm of portion 20a is 230mm, the length $d$ is 13mm compared with a typical nozzle spacing of 82.5 mm.

It will be understood that it is not necessary to stagger the nozzles on the bars 18 to ensure that successive impact areas do not follow the same paths over the screen 7. The same result can, for example, be achieved by adjusting the inclination of the nozzles: for example, the inclination of the nozzles on the bar 18b could differ from that of the nozzles on the bar 18a to achieve the required staggering, or displacement, of the paths of the impact areas of those nozzles.

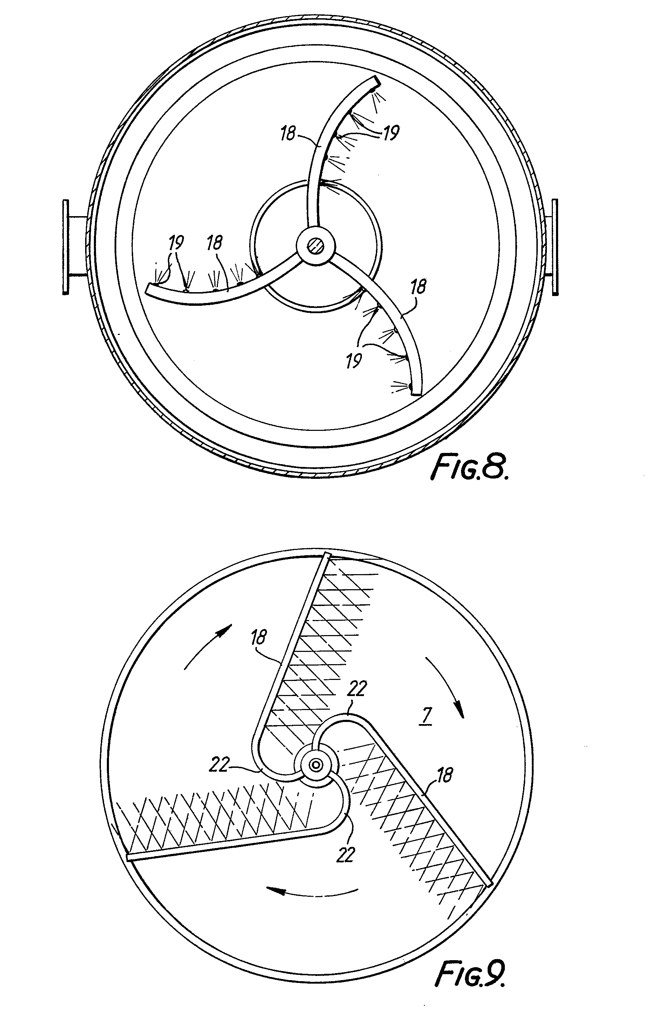

It will be appreciated that the spray bars need not have the particular shape illustrated in Fig. 2 although this shape does facilitate the staggering of the nozzles. The bars could, for example, have the arcuate shape shown in Fig. 8 or could have arcuate inner portions 22 as shown in Fig. 9 rather than the angled inner portions 20. It will also be understood that it is not essential to employ three spray bars as illustrated and that any appropriate number of bars can be used. Alternatively, an arrangement can be provided in which cleaning water is directed at the screen from one or more nozzle which not only rotates about, but can also be moved towards or away from, the centre of the screen 7 to provide a succession of displaced impact areas. Through an appropriate choice of the displacement of successive impact areas, coverage of the screen comparable with that provided by the shower bar arrangement of Fig. 2 can be achieved.

In an alternative form of the invention, the spray bars 18 are located below, rather than above, the screen 7 and direct water upwards through the screen to urge the solids towards the central opening 8.

If required, a so-called distributor plate can be located at the top of the inner container 4, above the spray bars 18 to distribute the liquid to be filtered before it falls onto the screen 7. This plate can, for example, be a substantially flat plate with perforations and will, in addition, serve to weaken the impact of the liquid on the screen 7 and can also be used to prevent the liquid swirling on the screen. In addition, a cover can be provided for the tank 1.

Finally, although an arrangement has been described in which the liquid to be filtered is supplied to the screen 7 over the top of the upstanding peripheral wall 4, any other appropriate supply arrangement can be used.

**Claims**

1. A filtering device comprising a filter screen arranged to receive a liquid to be filtered and a plurality of nozzles positioned to direct a cleaning liquid at the screen and movable relative to the screen in succession to remove solids deposited on the screen from the liquid being filtered, the nozzles being so arranged that successive nozzle impact areas do not follow the same path(s) over the screen.

2. A filtering device comprising a circular filter screen arranged to receive a liquid to be filtered and having an outlet for solids deposited on the screen from the liquid, and a plurality of nozzles rotatable in succession, relative to the screen, about an axis at the centre of the screen, the nozzles being positioned to direct a cleaning liquid at the screen to direct solids deposited thereon to the outlet and being so arranged that successive nozzle impact areas on the screen are displaced radially relative to the screen.

3. A device as claimed in claim 2, including a plurality of support members each of which carries a plurality of nozzles and which are rotatable one after another about the said axis at the centre of the screen.

4. A device as claimed in claim 3, in which the nozzles are so arranged on the support members that the impact areas of nozzles on one support member are displaced relative to the impact areas of nozzles on another support member.

5. A device as claimed in claim 4, in which the nozzles on the said one support member are located at one set of distances from the said axis and the nozzles on the other support member are located at a different set of distances.

6. A device as claimed in claim 4, in which the nozzles on the said one support member are located at one inclination to the screen and the nozzles on the other support member are located at another inclination.

7. A device as claimed in claim 5, in which each support member comprises an inner portion which extends from the said axis and an outer portion in which the nozzles are located, the length of the inner portion of one support member being different from the length of the inner portion of the other support member.

8. A device as claimed in claim 7, in which the inner portion is arcuate or angled.

9. A device as claimed in any one of claims 3 to 8, in which cleaning liquid is supplied to the nozzles through the support members.

10. A device as claimed in any one of claims 2 to 9, in which the screen has an upstanding peripheral wall and liquid to be filtered is supplied to the screen over the top of the wall from a surrounding tank, the solids outlet being at the centre of the screen.

11. A method of filtering a liquid, comprising the steps of supplying the liquid to a filter screen; directing at least one jet of cleaning liquid at the screen and effecting relative movement between the jet(s) and the screen to cause the passage over the screen of a succession of jet impact areas and thereby to move solids deposited on the screen from the liquid being filtered, in which successive impact areas do not follow the same path over the screen.

12. A method as claimed in claim 11, in which successive impact areas are displaced in a direction perpendicular to the direction of relative movement.

FIG.1.

0232128

FIG.3.

FIG.2.

FIG.4.

21

19

19

19

FIG.6a.
18a
7

FIG.6b.
18b
7

FIG.6c.
18c
7

FIG.5.
18a
18c
18b

*Fig.7.*

0232128

FIG.8.

FIG.9.